# EUROPÄISCHE PATENTSCHRIFT

(11) **EP 2 088 439 B1**
(45) Veröffentlichungstag und Bekanntmachung des Hinweises auf die Patenterteilung: **16.03.2011**
(21) Anmeldenummer: 09001054.7
(22) Anmeldetag: 27.01.2009
(51) Int. Cl.: G01R 31/00, G01L 5/28, G01M 17/00

(54) **Vorrichtung zur Funktionsüberprüfung eines Fahrzeugs**
Device for testing the functionality of a vehicle
Dispositif de contrôle du fonctionnement d'un véhicule

(30) Priorität: 07.02.2008 DE 102008008012
(43) Veröffentlichungstag der Anmeldung: 12.08.2009
(73) Patentinhaber: IT-Designers GmbH, 73730 Esslingen (DE)
(72) Erfinder: Ulmer, Daniel, 71083 Herrenberg (DE); Bühler, Oliver, 73266 Bissingen/Teck (DE); Hünlich, Karsten, 73730 Esslingen (DE)
(74) Vertreter: Ruckh, Rainer Gerhard

(56) Entgegenhaltungen:
- EP-A- 1 729 104
- DE-A1-102006 053 559
- DE-A1-102006 061 523
- US-A1- 2003 004 626
- US-B1- 6 377 210
- US-B1- 6 505 106

## Beschreibung

Die Erfindung betrifft eine Vorrichtung zur Funktionsüberprüfung eines Fahrzeugs.

Die Erfindung bezieht sich generell auf Fahrzeuge unterschiedlicher Ausbildung und insbesondere auf Kraftfahrzeuge.

Im Herstellungsprozess von Fahrzeugen, insbesondere Kraftfahrzeugen, müssen zur Gewährleistung von Qualitäts- und Sicherheitsstandards umfangreiche Tests durchgeführt werden um sicherzustellen, dass die einzelnen Komponenten des Fahrzeugs fehlerfrei arbeiten.

Die einzelnen Komponenten können zwar generell vor Zusammenbau des Fahrzeugs einzeln getestet werden, wobei hierfür definierte Prozesse und Einrichtungen existieren.

Insbesondere können derartige Komponenten im Prototypen- oder Nullserienstadium auf Prüfständen getestet werden. Bei Elektronikkomponenten von Fahrzeuge besteht jedoch ein Problem darin, dass diese mit weiteren Elektronikkomponenten im Fahrzeug wechselwirken, wobei insbesondere das Zeitverhalten der einzelnen Komponenten kritisch sein kann. Beispiele hierfür sind komplexe Regel- und Steuereinheiten, die das Fahrverhalten von Kraftfahrzeugen beeinflussen. Die mit diesen Einheiten vorgenommenen Regel- und Steuereinheiten sind unter anderem abhängig vom Zeitverhalten von Sensoren im Kraftfahrzeug und auch von der Aktorik, die mit diesen Einheiten angesteuert wird. Eine hinreichend umfangreiche und genaue Abbildung derartiger komplexer Systeme ist auf Prüfständen oft nicht in ausreichendem Maß möglich. Ein besonderes Problem besteht dabei darin, dass in einer Prüffeldumgebung das Zeitverhalten durch die CPU-Zeiten von dort implementierten Rechnereinheiten bestimmt ist. Das reale Zeitverhalten im Kraftfahrzeug selbst wird demnach nicht exakt abgebildet. Dies führt insbesondere bei Elektronikeinheiten, die sehr schnelle, zeitkritische Steuer- oder Regelvorgänge durchführen, zu einer mangelhaften Prüfung auf dem Prüfstand.

Weiterhin ist es bekannt, in Fahrzeugen, insbesondere in Kraftfahrzeugen, auch Fehlerspeicher zu integrieren, in welchen bestimmte Fehlermeldungen abgespeichert werden können. Nachdem ein Kraftfahrzeug ausgeliefert und vom jeweiligen Kunden genutzt wird, kann zu Wartungszwecken oder bei Auftreten einer Fehlfunktion des Kraftfahrzeugs über eine Diagnoseschnittstelle der Inhalt des Fehlerspeichers ausgelesen werden. Anhand der aus dem Fehlerspeicher ausgelesenen Fehlermeldung kann dann eine Wartung oder eine Reparatur des Kraftfahrzeugs durchgeführt werden.

Im Herstellungsprozess des Kraftfahrzeugs, typischerweise während der Erprobung des Kraftfahrzeugs innerhalb der Vorserie, ist jedoch eine umfangreiche Überprüfung aller Fahrzeugfunktionen erforderlich, deren Umfang von den im Fehlerspeicher abgespeicherten Fehlermeldungen nicht abgedeckt werden kann. Fallen beispielsweise Lenkungs- und oder Bremssysteme im Kraftfahrzeug aus oder arbeiten diese fehlerhaft, so wird dies zwar pauschal mit einer Fehlermeldung im Fehlerspeicher vermerkt. Jedoch gibt diese Fehlermeldung weder eine Aussage über die spezifische Ausbildung des Fehlers noch über dessen Ursachen.

Die EP 1 729 104 A1 betrifft ein Verfahren zur Prüfung einer Druckluftbremsanlage eines Nutzfahrzeugs. Die Prüfung kann während der Fahrt des Nutzfahrzeugs durchgeführt werden, wobei einzelne Prüfschritte der Prüfung in einer Datenverarbeitungseinheit gespeichert werden und der Bedienperson angezeigt werden, so dass diese durch das Prüfungsprogramm geführt wird.

Die US 6,377,210 B1 betrifft eine Vorrichtung zur Positionsbestimmung eines Automobils unter Einsatz von GPS-Daten.

Der Erfindung liegt die Aufgabe zugrunde, eine Vorrichtung der eingangs genannten Art bereitzustellen, mit welcher eine umfangreiche und zuverlässige Funktionsprüfung von Kraftfahrzeugen durchführbar ist.

Zur Lösung dieser Aufgabe sind die Merkmale des Anspruchs 1 vorgesehen. Vorteilhafte Ausführungsformen und zweckmäßige Weiterbildungen der Erfindung sind in den Unteransprüchen beschrieben.

Die erfindungsgemäße Vorrichtung dient zur Funktionsprüfung eines Fahrzeugs mit Mitteln zur Aktivierung einer Folge von Testschritten. Die Funktionsüberprüfung bildet einen in Testfälle gegliederten Test, wobei jeweils ein Testfall in eine Folge von Testschritten gegliedert ist. In einem ein ereignisgesteuertes System bildenden Zustandsautomaten werden die Testschritte modelliert und für diese Zielvorgaben definiert. Nach Aktivierung eines Testschritts werden Zielvorgaben an eine Ausgabeeinheit für den Fahrer des Fahrzeugs und/oder an eine Rechnereinheit und/oder an einen Aktor des Fahrzeugs ausgegeben. Die Erfüllung oder der Grad der Erfüllung der Zielvorgaben wird überprüft und bei erfüllten Zielvorgaben wird der nächste Testschritt der Folge aktiviert. Bei der Durchführung der Testschritte generierte Daten werden mittels eines Datenaufzeichnungssystems aufgezeichnet, welches eine eine Speichereinheit aufweisende Rechnereinheit, eine Zeitstempeleinheit sowie eine Schnittstelleneinheit zum Anschluss an das Fahrzeug aufweist. Über die Schnittstelleneinheit eingelesene Daten werden mit in der Zeitstempeleinheit generierten absoluten Zeitstempeln versehen und in der Speichereinheit abgespeichert.

Die erfindungsgemäße Vorrichtung bildet ein rechnergestütztes System mittels dessen eine genaue und umfangreiche Funktionsprüfung eines Fahrzeugs, insbesondere eines Kraftfahrzeugs, ermöglicht wird. Der Begriff Fahrzeug umfasst dabei fahrbare Einheiten jedweder Art, wie zum Beispiel auch ein Kran.

Ein wesentlicher Vorteil der Erfindung besteht darin, dass mit dem im Fahrzeug selbst implementierten System durch die Vorgabe von Testschritten und die Auswertung der dabei entstehenden Messergebnisse Informationen über die Funktionsfähigkeit von Fahrzeugkomponenten, insbesondere auch von komplexen Elektroniksystemen, unter Realbedingungen, das heißt im Fahrzeugbetrieb selbst, gewonnen werden können. Die Messergebnisse liefern damit insbesondere Informationen über derartige Fahrzeugkomponenten unter Einbeziehung der tatsächlich im Fahrzeug vorhandenen Wechselwirkungen mit anderen Komponenten, wie zum Beispiel weiteren Elektroniksystemen, sowie mit im Fahrzeug vorhandenen Sensoren und Aktoren.

Die mit der erfindungsgemäßen Vorrichtung durchgeführte Funktionsprüfung bildet einen Test, der in Testfälle untergliedert ist. Jeweils ein Testfall ist in eine Folge von Testschritten gegliedert, welche von einem Zustandsautomaten modelliert werden.

Der Prozess der Funktionsprüfung wird manuell durch den Fahrer des Fahrzeugs gestartet, worauf der erste Testschritt aktiviert wird. Für jeden Testschritt werden Zielvorgaben definiert, die bevorzugt durch den Zustandsautomaten über eine Schnittstelleneinheit an den Fahrer und/oder einen Aktor oder eine den Aktor steuernde oder eine weitere Funktion durchführende Rechnereinheit ausgegeben werden. Im ersten Fall erfolgt die Ausgabe einer Zielvorgabe an eine Ausgabeeinheit, die für den Fahrer wahrnehmbar angeordnet ist. Als derartige Zielvorgabe kann zum Beispiel ausgegeben werden, dass der Fahrer eines Kraftfahrzeugs dieses auf eine bestimmte Geschwindigkeit beschleunigt und dann diese Geschwindigkeit für eine bestimmte Zeit hält. Eine an einen Aktor ausgegebene Zielvorgabe kann beispielsweise die Aktivierung oder Deaktivierung einer Tempomatfunktion sein. Weiterhin kann auch für einen Testschritt eine kombinierte Zielvorgabe an den Fahrer und einen Aktor vorgegeben werden. Sieht beispielsweise ein Testschritt vor, dass das Kraftfahrzeug mit einer vorgegebenen Verzögerung abgebremst werden soll, so reicht die Zielvorgabe für den Fahrer "Bremsvorgang durchführen" nicht aus, da der Fahrer den genauen Wert der Bremsverzögerung durch Betätigen des Bremspedals des Fahrzeugs nicht generieren kann. Daher wird eine zweite Zielvorgabe an ein die Bremse des Kraftfahrzeugs steuerndes Elektronikmodul ausgegeben, durch welches dieses bei einem beliebig gestalteten, durch den Fahrer durch Betätigen des Bremspedals ausgelösten Bremsvorgang, exakt die in der Zielvorgabe definierte Bremsverzögerung eingestellt wird.

Die Mittel zur Aktivierung der Testschritte, insbesondere der Zustandsautomaten arbeiten derart, dass ein nächster Testschritt nur dann aktiviert wird, wenn die Zielvorgabe für den vorigen Testschritt erfüllt wird, das heißt sich das erwartete, vorgegebene Ereignis einstellt. Die Kontrolle der Einhaltung der Zielvorgabe erfolgt dabei bevorzugt durch Auswertung von Messsignalen von in dem Kraftfahrzeug integrierter Sensorik. Die so ausgebildeten Mittel zur Generierung der Testschritte bilden somit ein ereignisgesteuertes System.

Die Ergebnisse der Testfälle werden, beispielsweise in einer Rechnereinheit ausgewertet. Insbesondere werden dabei Testfallergebnisse generiert, indem die Ergebnisse für Testfälle mit vorgegebenen Sollwerten verglichen werden. Bei einer Abweichung der Ergebnisse von den Sollwerten können beispielsweise Fehlermeldungen generiert werden. Generell kann auch die Abarbeitung einer Menge von Testfällen abhängig von den Ergebnissen vorher durchgeführter Testfälle gewählt werden.

Die bei der Funktionsüberprüfung erhaltenen Daten werden bevorzugt in einem Datenaufzeichnungssystem aufgezeichnet und gespeichert, wodurch die Funktionsüberprüfung vollständig dokumentiert ist. Diese aufgezeichneten Daten können insbesondere zur Aufdeckung von Fehlfunktionen ausgewertet werden, wobei die Auswertung in der Vorrichtung selbst oder besonders vorteilhaft in einer externen Einheit erfolgen kann.

Erfindungsgemäß weist das Datenaufzeichnungssystem eine Speichereinheit, eine Rechnereinheit, eine Zeitstempeleinheit sowie eine Schnittstelleneinheit zum Anschluss an das Fahrzeug auf. Über die Schnittstelleneinheit werden eingelesene Daten mit in der Zeitstempeleinheit generierten absoluten Zeitstempeln versehen und in der Speichereinheit abgespeichert.

Durch die Kennzeichnung der Daten mit absoluten Zeitstempeln wird beispielsweise eine zeitaufgelöste Auswertung derart ermöglicht, dass Daten aus verschiedenen Kraftfahrzeugen zeitlich miteinander in Beziehung gesetzt werden, um zeitliche Abläufe fahrzeugübergreifender Funktionen kontrollieren, messen und prüfen zu können. Hierzu werden die Daten verschiedener Fahrzeuge von den diesen zugeordneten Datenaufzeichnungssystemen in eine externe Auswerteeinheit eingelesen und dort zeitaufgelöst miteinander verglichen. Der Zeitstempel muss innerhalb des zu untersuchenden Systems eine eindeutige, absolute Größe sein. Es ist dabei nicht zwingend erforderlich, jedoch vorteilhaft, universelle Zeitsignale, wie sie von Satellitensystemen bereitgestellt werden, zu verwenden. Beispiele hierfür sind GPS- oder Galileo-Signale.

Eine weitere vorteilhafte Anwendungsmöglichkeit des mit absoluten Zeitstempeln arbeitenden Datenaufzeichnungssystems besteht darin, dass mit derartigen Systemen generierte Testabläufe in Prüfständen implementiert werden können, um so bei Fahrzeugkomponenten, insbesondere komplexen Elektroniksystemen, eine Prüfung unter Realzeitbedingungen durchführen zu können. Da nämlich bei in der erfindungsgemäßen Vorrichtung vorgenommenen Funktionsprüfung eines Fahrzeugs eine schrittweise Abarbeitung der Testschritte und eine Registrierung der dabei anfallenden Daten unter absoluten Zeitstempeln erfolgt, liegt die so durchgeführte Funktionsprüfung mit absoluten Zeitstempeln versehen und daher von rechnerspezifischen CPU-Zeiten unabhängig vor. Dementsprechend kann durch Abspielen dieser zeitaufgelösten Daten der Funktionsprüfung eines Fahrzeugs auf einem Prüfstand zur isolierten Prüfung einer Komponente dieses unter Realzeitbedingungen und unabhängig von den CPU-Zeiten der Rechnereinheiten des Prüfstands geprüft werden. Damit kann das Zeitverhalten derartiger Komponenten, insbesondere auch Elektroniksystemen, die zeitkritische Regel- und Steuervorgänge durchführen, unter den im Fahrzeug tatsächlich vorliegenden Bedingungen getestet werden.

Die Erfindung wird im Folgenden anhand der Zeichnungen erläutert. Es zeigen:
- Figur 1:: Schematische Darstellung einer in einem Fahrzeug integrierten Vorrichtung zu dessen Funktionsüberprüfung.
- Figur 2:: Aufbau der Vorrichtung gemäß Figur 1.

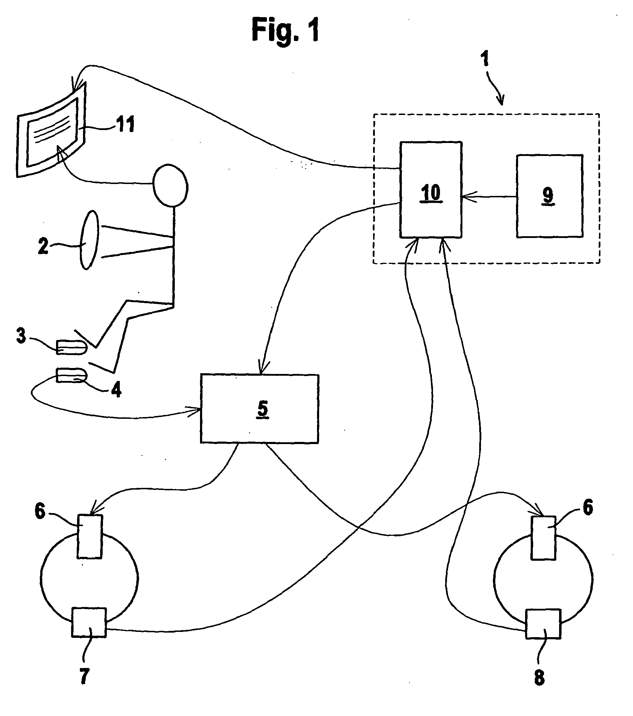

Figur 1 zeigt schematisch eine Vorrichtung 1 zur Funktionsüberprüfung eines Fahrzeugs. Das Fahrzeug ist im vorliegenden Fall von einem Kraftfahrzeug gebildet. In Figur 1 sind beispielhaft für die von einem Fahrer betätigbaren Stellmittel des Kraftfahrzeugs das Lenkrad 2 sowie das Fahrpedal 3 und Bremspedal 4 des Kraftfahrzeugs dargestellt. Weiterhin ist in Figur 1 ein die Bremsanlage steuerndes Elektronikmodul 5 dargestellt, welches als Aktor 6 die Bremse des Kraftfahrzeugs steuert. Weiterhin sind Sensoren 7, 8 vorgesehen, beispielsweise in Form von Drehzahlsensoren, mittels deren Fahrzeugkenngrößen, wie die Geschwindigkeit und Beschleunigung des Kraftfahrzeugs, messbar sind.

Insbesondere bei Kraftfahrzeugen im Prototypen- und Nullserienstatus ist eine möglichst vollständige Funktionsüberprüfung unter realen Einsatzbedingungen erforderlich. Hierzu dient die erfindungsgemäße Vorrichtung 1, welche von einem Rechnersystem gebildet ist, das im Kraftfahrzeug zu Testzwecken eingebaut ist.

Die Vorrichtung 1 umfasst Mittel zur Generierung von Testfällen, welche jeweils in eine Folge von einzelnen Testschritten untergliedert sind. Diese Mittel umfassen im vorliegenden Fall einen Zustandsautomaten 9, der ein auf dem Rechnersystem implementiertes Softwaremodul bildet. Dort sind die Testfälle mit den Testschritten in Form einer Datei abgespeichert.

Die Vorrichtung 1 umfasst weiterhin ein Datenaufzeichnungssystem 10, mittels dessen bei der Funktionsüberprüfung des Kraftfahrzeugs generierte Daten aufgezeichnet werden können. Das Datenaufzeichnungssystem 10 ist ebenfalls auf dem Rechnersystem implementiert. Über geeignete Schnittstellen ist die Vorrichtung 1, insbesondere das Datenaufzeichnungssystem 10 dieser Vorrichtung 1 an Einheiten des Kraftfahrzeugs, insbesondere an im Kraftfahrzeug implementierte Bussysteme, die zur Steuerung von Elektronikkomponenten, Sensoren 7, 8 und Aktoren 6 dienen, angeschlossen. An die Vorrichtung 1 ist weiterhin ein Terminal 11 oder dergleichen angeschlossen, welches eine Eingabeeinheit und Ausgabeeinheit für den Fahrer bildet.

Der Zustandsautomat 9 bildet ein ereignisbasiertes System, mittels dessen nach manuellem Start der Funktionsüberprüfung die einzelnen Testschritte der Testfälle selbsttätig aktiviert werden. Das Datenaufzeichnungssystem 10 zeichnet die dabei generierten Daten auf, die als zeitaufgelöste Daten über eine Schnittstelle externen Einheiten zur Verfügung gestellt werden können. Generell können die im Datenaufzeichnungssystem 10 aufgezeichneten Daten vom Fahrer selbst noch mit eigenen Bewertungen versehen werden.

Mit den im Zustandsautomat 9 vorgegebenen Testfällen können unterschiedliche Fahrzeugfunktionen überprüft werden. Beispielhaft wird ein solcher Testfall für eine Funktionsprüfung der Bremse des Kraftfahrzeugs erläutert.

Ein solcher Testfall kann vorsehen, dass zunächst das Kraftfahrzeug für eine bestimmte Strecke, beispielsweise 400 m mit einer Geschwindigkeit von 50 km/h gefahren wird, um dann einen Bremsvorgang mit einer Bremsbeschleunigung a = aₒ durchzuführen.

Dieser Testfall ist untergliedert in die Testschritte
1) Fahrzeug auf 50 km/h beschleunigen
2) Fahrzeug für 400 m konstant auf 50 km/h halten
3) Fahrzeug mit einer Bremsbeschleunigung von a = aₒ abbremsen.

Die Abarbeitung von Testschritten mittels des Zustandsautomaten 9 erfolgt derart, dass für jeden Testschritt wenigstens eine Zielvorgabe generiert wird, wobei eine solche Zielvorgabe entweder an die Ausgabeeinheit ausgegeben wird, damit diese vom Fahrer abgearbeitet wird, oder an eine Einheit, insbesondere eine Elektronikeinheit, im Kraftfahrzeug ausgegeben wird, damit diese selbsttätig im Kraftfahrzeug ausgeführt wird.

Durch Rücklesen von Antwortgrößen aus dem Kraftfahrzeug, insbesondere von Signalen von Sensoren 7, 8 im Kraftfahrzeug, wird dann im Zustandsautomat 9 geprüft, ob für den Testschritt die Zielvorgabe erfüllt wurde, das heißt ob das erwartete Ereignis eingetreten ist. Nur wenn dies der Fall ist, wird über den Zustandsautomaten 9 der nächste Testschritt abgearbeitet.

Im vorliegenden Beispiel können für die ersten beiden Testschritte die Zielvorgaben über die Ausgabeeinheit dem Fahrer angezeigt werden. Beide Zielvorgaben werden vom Fahrer durch geeignetes Betätigen des Fahrpedals 3 erfüllt.

Nach erfolgter Abarbeitung der ersten beiden Testschritte wird in dem Zustandsautomat 9 der nächste Testschritt generiert. Da der Fahrer selbst diese Zielvorgabe einer genau vorgegebenen Bremsbeschleunigung nicht selbst exakt erfüllen kann, wird für den dritten Testschritt vom Zustandsautomat 9 einerseits für den Fahrer eine Zielvorgabe "Bremsvorgang auslösen" generiert und an der Ausgabeeinheit angezeigt. Gleichzeitig wird an das die Bremse steuernde Elektronikmodul 5 eine Zielvorgabe derart ausgegeben, dass dann, wenn vom Fahrer das Bremspedal 4 in irgend einer Form betätigt wird, die Bremsbeschleunigung auf den Wert a = aₒ eingestellt wird.

Betätigt nun der Fahrer die Bremse, wird über das Elektronikmodul 5 der Bremsvorgang mit der vorgegebenen Bremsbeschleunigung a = aₒ durchgeführt, unabhängig davon, wie stark der Fahrer das Bremspedal 4 betätigt.

Nachdem der letzte Testschritt des Testfalls abgearbeitet wurde, wird im Zustandsautomat 9 der nächste Testfall aktiviert, um in analoger Weise die Testschritte dieses Testfalls abzuarbeiten.

Generell erfolgt, insbesondere in der Rechnereinheit 12 oder in einer weiteren Rechnereinheit eine Auswertung der Testfälle. Dabei werden die Ergebnisse von Testfällen mit vorgegebenen Sollwerten verglichen um so Testfallergebnisse zu generieren. Insbesondere kann die Abarbeitung einer Menge von Testfallen abhängig von den Ergebnissen vorher abgearbeiteter Testfälle gewählt werden.

Während der gesamten Funktionsüberprüfung des Kraftfahrzeugs werden vom Datenaufzeichnungssystem 10 die hierbei anfallenden Daten komplett und zeitaufgelöst aufgezeichnet. Anhand dieser Daten kann die Funktionsfähigkeit der Komponenten des Kraftfahrzeugs überprüft werden.

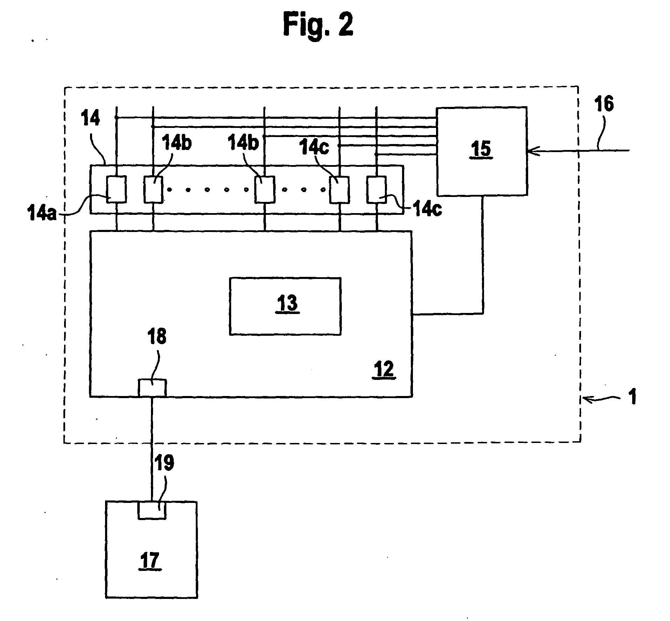

Figur 2 zeigt eine spezifische Ausführungsform der Vorrichtung 1 gemäß Figur 1. Das Rechnersystem der Vorrichtung 1 umfasst in diesem Fall eine einzelne Rechnereinheit 12 in Form eines Controllers, wobei die Rechnereinheit 12 eine Speichereinheit 13 aufweist. Auf diesem Rechnersystem ist der Zustandsautomat 9 implementiert. Zugleich ist die Rechnereinheit 12 Bestandteil des Datenaufzeichnungssystems 10.

Das Rechnersystem der Vorrichtung 1 weist eine Schnittstelleneinheit 14 zum Anschluss an das Kraftfahrzeug auf. Die Schnittstelleneinheit 14 ist dabei an die in den Kraftfahrzeugen vorhandenen Fahrzeugbusse und Fahrzeugschnittstellen angepasst.

Kraftfahrzeuge weisen typischerweise Fehlerspeicher zum Speichern von Fehlermeldungen auf, die über eine Diagnoseschnittstelle auslesbar sind. Weiterhin sind in einem Kraftfahrzeug als Fahrzeugbusse mehrere CAN-Busse und LIN-Busse integriert. Daran angepasst weist die Schnittstelleneinheit 14 einen ersten CAN-Controller 14a zum Anschluss an die Diagnoseschnittstelle auf. Zudem weist die Schnittstelleneinheit 14 weitere CAN-Controller 14b zum Anschluss an die CAN-Busse des Kraftfahrzeugs auf. Schließlich weist die Schnittstelleneinheit 14 LIN-Controller 14c zum Anschluss an die LIN-Busse des Kraftfahrzeugs auf. Im vorliegenden Fall bilden die CAN-Controller 14a, b und die LIN-Controller 14c externe Einheiten. Generell können einige oder sämtliche dieser Controller in der Rechnereinheit 12 integriert sein.

Das Datenaufzeichnungssystem 10 weist weiterhin eine Zeitstempeleinheit 15 auf, mittels derer absolute Zeitstempel generiert werden. Hierzu empfängt die Zeitstempeleinheit 15 GPS-Signale 16, das heißt absolute Zeitsignale. Generell kann die Zeitstempeleinheit 15 auch andere Zeit-Signale, wie Galileo-Signale, empfangen. Die Zeitstempeleinheit 15, die von einem Prozessor oder dergleichen gebildet ist, ist an die Rechnereinheit 12 angeschlossen. Zudem ist die Zeitstempeleinheit 15 an die Ein- und Ausgänge der CAN-Controller 14a, b und LIN-Controller 14c angeschlossen. Mittels der Zeitstempeleinheit 15 werden die über die CAN-Controller 14a, b und LIN-Controller 14c der Schnittstelleneinheit 14 ein- und ausgelesenen Daten mit in der Zeitstempeleinheit 15 generierten absoluten Zeitstempeln versehen, so dass in der Rechnereinheit 12 des Datenaufzeichnungssystems 10 die eingelesenen Daten sowie die auf die Busse ausgeschriebenen Daten mit den zugehörigen Absolut-Zeitwerten gekennzeichnet sind. Die Daten mit den Zeitstempeln können in der Speichereinheit 13 gespeichert werden. Prinzipiell können in der Speichereinheit 13 sämtliche eingelesenen Daten abgespeichert werden. Alternativ können in der Rechnereinheit 12 Triggerbedingungen definiert werden, wobei in Abhängigkeit dieser Triggerbedingungen nur Daten innerhalb vorgegebener Zeitintervalle gespeichert werden.

Zur Generierung derartiger Triggerbedingungen können beispielsweise die von der Diagnoseschnittstelle des Kraftfahrzeugs eingelesenen Fehlermeldungen verwendet werden. Dies ist insbesondere dann sinnvoll, wenn die Daten in dem Datenaufzeichnungssystem 10 zu Diagnosezwecken verwendet werden sollen. Die Fehlermeldungen im Fehlerspeicher des Kraftfahrzeugs liefern nur unvollständige Informationen über die Ursachen von auftretenden Fehlern. Für eine vollständige Diagnose ist es daher notwendig, zusätzlich die Daten der Fahrzeugbusse auszuwerten. Um die anfallende Datenmenge in Grenzen zu halten, werden in der Rechnereinheit 12 Triggerbedingungen derart definiert, dass die von den Fahrzeugbussen eingelesenen Daten jeweils nur in einem ersten Teilzeitintervall vor der jeweiligen Fehlermeldung und in einem zweiten Teilzeitintervall nach Auftreten der Fehlermeldung in der Speichereinheit 13 gespeichert werden. Diese Teilzeitintervalle ergänzen sich somit zu einem Zeitintervall, innerhalb dessen die Fehlermeldung auftritt. Hierbei wird der Umstand ausgenutzt, dass die Fehlerursachen eines Fehlers in zeitlichem Bezug zu diesem liegen.

Die im Datenaufzeichnungssystem 10 generierten Daten können an eine externe Einheit 17 ausgegeben werden. Hierzu ist in der Vorrichtung 1 eine Schnittstelle 18 vorgesehen. Die externe Einheit 17 weist eine hierzu korrespondierende Schnittstelle 19 auf. Diese Schnittstellen 18, 19 können beispielsweise als Ethernet-Schnittstellen ausgebildet sein.

Die externe Einheit 17 kann generell eine Auswerteeinheit sein, in welcher beispielsweise während des Fahrzeugbetriebs auftretende Fehlfunktionen anhand der im Datenaufzeichnungssystem 10 generierten Daten analysiert werden können. Generell können dabei in der Auswerteeinheit auch die Daten mehrerer Kraftfahrzeuge ausgewertet werden, um fahrzeugübergreifende Funktionen kontrollieren zu können. Da die Daten aller Kraftfahrzeuge mit absoluten Zeitstempeln versehen sind, können diese exakt zeitaufgelöst werden und in eine zeitlich chronologische Reihenfolge gebracht werden. Anhand dieses Datensatzes können fahrzeugübergreifende Funktionen kontrolliert werden, wie zum Beispiel Datenübertragungen mittels Licht- und Funksignalen zwischen den einzelnen Fahrzeugen. In diesem Fall kann anhand des Datensatzes geprüft werden, ob die Aussendung von Signalen eines Kraftfahrzeugs sowie der Empfang der Signale in einem anderen Kraftfahrzeug korrekt erfolgt ist.

In einer weiteren Ausgestaltung kann die externe Einheit auch aus einem Prüfstand gebildet sein, auf welchem beispielsweise die Funktion einer Elektronikeinheit des Kraftfahrzeugs geprüft wird. Mit den in der Vorrichtung 1 bei der Testung eines Kraftfahrzeugs generierten, mit absoluten Zeitstempeln generierten Daten kann die Elektronikeinheit unter Realzeitbedingungen, das heißt unabhängig von CPU-Zeilen von Rechnersystemen des Prüfstands getestet werden, da die mit den Zeitstempeln versehenen Daten den Fahrzeugtest in Realzeit exakt wiedergeben.

### Bezugszeichenliste

- (1): Vorrichtung
- (2): Lenkrad
- (3): Fahrpedal
- (4): Bremspedal
- (5): Elektronikmodul
- (6): Aktor
- (7): Sensor
- (8): Sensor
- (9): Zustandsautomat
- (10): Datenaufzeichnungssystem
- (11): Terminal
- (12): Rechnereinheit
- (13): Speichereinheit
- (14): Schnittstellenheit
- (14a): CAN-Controller
- (14b): CAN-Controller
- (14c): LIN-Controller
- (15): Zeitstempeleinheit
- (16): GPS-Signal
- (17): externe Einheit
- (18): Schnittstelle
- (19): Schnittstelle

## Patentansprüche

1. Vorrichtung (1) zur Funktionsprüfung eines Fahrzeugs mit Mitteln zur Aktivierung einer Folge von Testschritten, wobei die Funktionsüberprüfung einen in Testfälle gegliederten Test bildet, und jeweils ein Testfall in eine Folge von Testschritten gegliedert ist, wobei in einem ein ereignisgesteuertes System bildenden Zustandsautomaten (9) die Testschritte abgespeichert sind und für diese Zielvorgaben definiert werden, wobei die Vorrichtung dazu eingerichtet ist, nach Aktivierung eines Testschritts Zielvorgaben an eine Ausgabeeinheit für den Fahrer des Fahrzeugs und/oder an eine Rechnereinheit (12) und/oder an einen Aktor (6) des Fahrzeugs auszugeben, und wobei die Erfüllung oder der Grad der Erfüllung der Zielvorgaben überprüft wird und bei erfüllten Zielvorgaben der nächste Testschritt der Folge aktiviert wird, und wobei die Vorrichtung dazu eingerichtet ist, bei der Durchführung der Testschritte generierte Daten mittels eines Datenaufzeichnungssystems aufzuzeichnen, welches eine eine Speichereinheit (13) aufweisende Rechnereinheit (12), eine Zeitstempeleinheit (15) sowie eine Schnittstelleneinheit (14) zum Anschluss an das Fahrzeug aufweist, wobei die Vorrichtung dazu eingerichtet ist, über die Schnittstelleneinheit (14) eingelesene Daten mit in der Zeitstempeleinheit (15) generierten absoluten Zeitstempeln zu versehen und in der Speichereinheit (13) abzuspeichern.

2. Vorrichtung nach Anspruch 1, **dadurch gekennzeichnet, dass** diese dazu eingerichtet ist, die Ergebnisse von Testfällen auszuwerten.

3. Vorrichtung nach Anspruch 2, **dadurch gekennzeichnet dass** diese dazu eingerichtet ist, die Ergebnisse von Testfällen mit Sollwerten zu vergleichen und daduch Testfallergebnisse zu generieren.

4. Vorrichtung nach einem der Ansprüche 1 bis 3, **dadurch gekennzeichnet, dass** diese dazu eingerichtet ist, die Abarbeitung eines Testfalls oder einer Menge von Testfällen abhängig von Ergebnissen anderer Testfälle auszuführen.

5. Vorrichtung nach einem der Ansprüche 1 bis 4, **dadurch gekennzeichnet, dass** der Zustandsautomat (9) auf der Rechnereinheit (12) implementiert ist, welche eine Speichereinheit (13) aufweist.

6. Vorrichtung nach einem der Ansprüche 1 bis 5, **dadurch gekennzeichnet, dass** diese dazu eingerichtet ist, mittels einer Sensorik im Fahrzeug zu überprüfen, ob die Zielvorgaben erfüllt sind.

7. Vorrichtung nach einem der Ansprüche 1 bis 6, **dadurch gekennzeichnet, dass** diese dazu eingerichtet ist, dem Fahrer über die Ausgabeeinheit die Erfüllung oder der Grad der Erfüllung einer Zielvorgabe anzuzeigen.

8. Vorrichtung nach einem der Ansprüche 1 bis 7, **dadurch gekennzeichnet, dass** den Mitteln zur Aktivierung der Testschritte die Schnittstelleneinheit (14) zum Anschluss an das Fahrzeug zugeordnet ist.

9. Vorrichtung nach einem der Ansprüche 1 bis 8, **dadurch gekennzeichnet, dass** diese dazu eingerichtet ist, zur Generierung absoluter Zeitstempel Satelliten-Zeitsignale in die Zeitstempeleinheit (15) einzulesen.

10. Vorrichtung nach einem der Ansprüche 1 bis 9, **dadurch gekennzeichnet, dass** das Fahrzeug von einem Kraftfahrzeug gebildet ist.

## Claims

1. Device (1) for function checking of a vehicle with means for activation of a sequence of test steps, wherein the function checking forms a test divided into test cases and each test case is divided into a sequence of test steps, wherein the test steps are stored in a status automatic machine (9) forming an event-controlled system and target presets are defined for these, wherein the device is equipped for the purpose of issuing, after activation of a test step, target presets to an output unit for the driver of the vehicle and/or to a computer unit (12) and/or to an actuator (6) of the vehicle and wherein the fulfilment or degree of fulfilment of the target presets is checked and if target presets are fulfilled the next test step of the sequence is activated and wherein the device is equipped for the purpose of recording data, which are generated during performance of the test steps, by means of a data recording system comprising a computer unit (12), a time stamp unit (15) and an interface unit (14) for connection with the vehicle, the computer unit comprising a memory unit (13), and wherein the device is equipped for the purpose of providing data, which are read in by way of the interface unit (14), with absolute time stamps generated in the time stamp unit (15) and storing these data in the memory unit (13).

2. Device according to claim 1, **characterised in that** this is equipped for the purpose of evaluating the results of test cases.

3. Device according to claim 2, **characterised in that** this is equipped for the purpose of comparing the results of test cases with target values and thereby generating test case results.

4. Device according to any one of claims 1 to 3, **characterised in that** this is equipped for the purpose of executing working down of a test case or of a number of test cases in dependence on results of other test cases.

5. Device according to any one of claims 1 to 4, **characterised in that** the status automatic machine (9) is implemented on the computer unit (12), which comprises a memory unit (13).

6. Device according to any one of claims 1 to 5, **characterised in that** this is equipped for the purpose of checking by means of a sensor system in the vehicle whether the target presets are fulfilled.

7. Device according to any one of claims 1 to 6, **characterised in that** this is equipped for the purpose of indicating the fulfilment or the degree of fulfilment of a target preset to the driver by way of the output unit.

8. Device according to any one of claims 1 to 7, **characterised in that** the interface unit (14) for connection with the vehicle is associated with the means for activation of the test steps.

9. Device according to any one of claims 1 to 8, **characterised in that** this is equipped for the purpose of reading satellite time signals into the time stamp unit (15) in order to generate absolute time stamps.

10. Device according to any one of claims 1 to 9, **characterised in that** the vehicle is formed by a motor vehicle.

## Revendications

1. Dispositif (1) pour le contrôle du fonctionnement d'un véhicule, avec des moyens pour activer une série d'étapes de test, sachant que le contrôle du fonctionnement forme un test divisé en situations de test et que chaque situation de test est divisée en une série d'étapes de test, sachant que les étapes de test sont mémorisées et définies pour ces objectifs à atteindre dans un automate d'état (9) formant un système commandé en fonction des évènements, sachant que le dispositif est conçu pour, suite à l'activation d'une étape de test, délivrer des objectifs à atteindre à une unité d'édition pour le conducteur du véhicule et/ou à une unité de calcul (12) et/ou à un actionneur (6) du véhicule, et sachant que l'atteinte ou le degré d'atteinte des objectifs est vérifié et que l'étape suivante de la série est activée si les objectifs sont atteints, et sachant que le dispositif est conçu pour enregistrer les données générées lors de l'exécution des étapes de test au moyen d'un système d'enregistrement de données qui comprend une unité de calcul (12) présentant une unité de mémorisation (13), une unité de datage (15) et une unité d'interface (14) pour le raccordement au véhicule, sachant que le dispositif est conçu pour doter les données lues via l'unité d'interface (14) de dateurs absolus générés dans l'unité de datage (15), et les mémoriser dans l'unité de mémorisation (13).

2. Dispositif selon la revendication 1, **caractérisé en ce qu'**il est conçu pour exploiter les résultats de situations de test.

3. Dispositif selon la revendication 2, **caractérisé en ce qu'**il est conçu pour comparer les résultats de situations de test à des valeurs de consigne et générer ainsi des résultats de situation de test.

4. Dispositif selon l'une des revendications 1 à 3, **caractérisé en ce qu'**il est conçu pour effectuer le traitement d'une situation de test ou d'un ensemble de situations du test en fonction de résultats d'autres situations de test.

5. Dispositif selon l'une des revendications 1 à 4, **caractérisé en ce que** l'automate d'état (9) est mis en place dans l'unité de calcul (12), qui présente une unité de mémorisation (13).

6. Dispositif selon l'une des revendications 1 à 5, **caractérisé en ce qu'**il est conçu pour vérifier si les objectifs sont atteints au moyen d'un équipement de détection dans le véhicule.

7. Dispositif selon l'une des revendications 1 à 6, **caractérisé en ce qu'**il est conçu pour indiquer au conducteur, au moyen de l'unité d'édition, l'atteinte ou le degré d'atteinte d'un objectif.

8. Dispositif selon l'une des revendications 1 à 7, **caractérisé en ce que** l'unité d'interface (14) pour le raccordement au véhicule est associée aux moyens pour activer les étapes de test.

9. Dispositif selon l'une des revendications 1 à 8, **caractérisé en ce qu'**il est conçu pour, afin de générer des dateurs absolus, lire dans l'unité de datage (15) des signaux horaires provenant d'un satellite.

10. Dispositif selon l'une des revendications 1 à 9, **caractérisé en ce que** le véhicule est un véhicule automobile.
